# EUROPEAN PATENT SPECIFICATION

(11) **EP 3 352 034 B1**
(45) Date of publication and mention of the grant of the patent: **22.07.2020**
(21) Application number: 18153078.3
(22) Date of filing: 23.01.2018
(51) Int. Cl.: G05B 23/02, G01M 5/00, G01M 15/14, G06Q 10/06, G06Q 10/08, G06Q 50/04

(54) **CLASSIFICATION OF GAS TURBINE ENGINE COMPONENTS**
KLASSIFIKATION VON TURBINENKOMPONENTEN
CLASSIFICATION DE COMPOSANTS DE MOTEURS À TURBINE À GAZ

(30) Priority: 23.01.2017 US 201715412293
(43) Date of publication of application: 25.07.2018
(73) Proprietor: United Technologies Corporation, Farmington, CT 06032 (US)
(72) Inventor: SCHWARZ, Frederick M., Glastonbury, CT Connecticut 06033 (US); HEINEMANN, Kurt R., East Hampton, CT Connecticut 06424 (US); LEVASSEUR, Glenn, Colchester, CT Connecticut 06415 (US)
(74) Representative: Dehns

(56) References cited:
- EP-A1- 2 908 115
- EP-A2- 3 082 004
- US-A1- 2003 167 616

## Description

### BACKGROUND OF THE INVENTION

This application relates to a method and system for providing more effective classification of, and usage decisions on, gas turbine engine components.

Gas turbine engines are known and typically include a fan delivering air into a compressor, where it is compressed, and then delivered into a combustor. The air is mixed with fuel and ignited. Products of this combustion pass downstream over turbine rotors, driving them to rotate. The turbine rotors, in turn, rotate the compressor and fan rotors.

As with any manufactured components, gas turbine engine components are subject to manufacturing tolerances. As such, some components may be closer to specification, and other components may be further away. Presently, the components are closely monitored to ensure they are within acceptable tolerance range, but other than this, no actual decision is made as to an eventual use based upon the distance from specification. Thus, when components, say turbine blades, are shipped with a turbine rotor, there may be a number of turbine blades close to specification, and a number of turbine blades away from specification on a common rotor. Such a "striped" rotor has a limited operational life, as the failure of the blade spaced furthest from specification will cause the entire rotor to come offline.

Each flight includes a speed increase at takeoff, which rapidly applies stresses on the rotating parts. Then, there is climb which is also relatively high power, cruise at altitude which is relatively low power, and then landing and a thrust reverse to stop movement of the aircraft.

However, all flights are not equal. The stresses and challenges on the components are different for different flights.

Prior art methods are disclosed in EP 3082004 A2, which discloses a method for maintaining a gas turbine but does not disclose recommending a suggested future use for the first category on a first aircraft expected to operate in more challenging flight conditions and for the second category on a second aircraft expected to operate in less challenging flight conditions, wherein the recommended future use includes a suggestion to utilize components of said first and second categories on particular type flights,

EP 2908115 A1 and US 2003/167616 A1.

### SUMMARY OF THE INVENTION

In a featured embodiment, a method is provided in accordance with claim 1.

In another embodiment according to the previous embodiment, the particular type flights are on an engine having a particular thrust rating.

In another embodiment according to any of the previous embodiments, the thrust ratings of all the engines at sea level take-off are plus or minus 25%.

In another embodiment according to any of the previous embodiments, the particular type flights are for use on an aircraft flying routes having distinctly different ambient temperature.

In another embodiment according to any of the previous embodiments, the component includes an internal cooling cavity, and the classification is done, at least in part, based upon a shape of the internal cooling cavity.

In another embodiment according to any of the previous embodiments, the component has an outer coating, and the classification is done, at least in part, based upon on a thickness of the coating.

In another embodiment according to any of the previous embodiments, the component has outer geometric features which are measured, and the classification is done, at least in part, based upon the outer geometric features.

In another embodiment according to any of the previous embodiments, the component includes a cooling cavity, and the classification is also done, at least in part, based upon a wall thickness from the internal cooling cavity to an outer wall.

In another embodiment according to any of the previous embodiments, the component has an outer coating, and the classification is also done, at least in part, on a thickness of the coating.

In another embodiment according to any of the previous embodiments, the component has an outer coating, and the classification is also done, at least in part, on a thickness of the coating.

In another embodiment according to any of the previous embodiments, or the method of any of claims 1 to 8, the method may further comprise installing a component classified in the first category on the first aircraft and/or a component classified in the second category on the second aircraft.

In another featured embodiment, a system is provided in accordance with claim 9.

In another embodiment according to the previous embodiment, the particular type flights are on an engine having a particular thrust rating.

In another embodiment according to any of the previous embodiments, the thrust ratings of all the engines at sea level take-off are plus or minus 25%.

In another embodiment according to any of the previous embodiments, the particular type flights are for use on an aircraft flying routes having distinctly different ambient temperature.

In another embodiment according to any of the previous embodiments, the component includes an internal cooling cavity, and the classification is done, at least in part, based upon a shape of the internal cooling cavity.

In another embodiment according to any of the previous embodiments, the component has an outer coating, and the classification is done, at least in part, based upon on a thickness of the coating.

In another embodiment according to any of the previous embodiments, the component has outer geometric features which are measured, and the classification is done, at least in part, based upon the outer geometric features.

In another embodiment according to any of the previous embodiments, the component includes an internal cooling cavity, and the classification is also done, at least in part, based upon a shape of the internal cooling cavity.

These and other features can be best understood from the following specification and drawings, the following of which is a brief description.

### BRIEF DESCRIPTION OF THE DRAWINGS

Figure 1 shows a gas turbine engine schematically.
Figure 2 shows a number of possible flight scenarios.
Figure 3A schematically shows an airfoil.
Figure 3B shows data gathered with regard to a particular airfoil.
Figure 3C shows a cross section of an airfoil.
Figure 3D is a graph showing potential uses for particular gas turbine engine components.
Figure 4 shows a system.
Figure 5A shows a prior art acceptable range for a particular component.
Figure 5B shows how the disclosed method expands the acceptable range.

### DETAILED DESCRIPTION

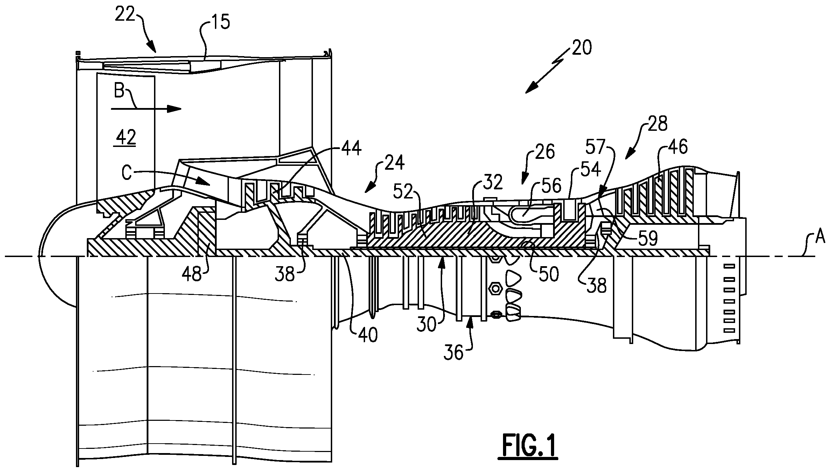

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 m/s).

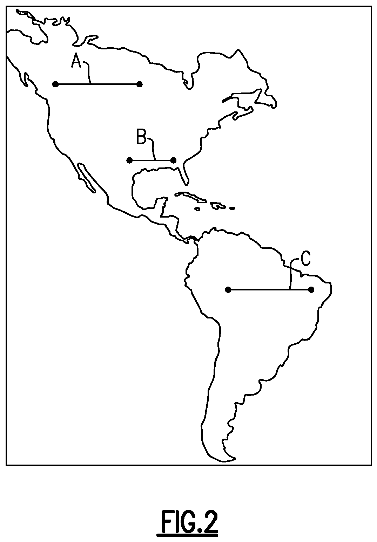

Figure 2 is a map showing the Americas. Three sample flights are illustrated. Flight A is in a cold environment and for a relatively long distance. Flight B is over a shorter distance. Flight C is over a distance which is long and in a relatively hot area closer to the equator.

Applicant has recognized that there may be greater challenges and stresses on aircraft engine components for the longer flights A and C than for the shorter flight B. This is because the aircraft typically carries greater weight and fuel. Thus, such flights use an engine that develops a good deal more thrust. The greater thrust provides a different amount of stresses to aircraft engine components than would be the case for the flight B. Of course, these are examples only. A flight between continents could provide different stress.

In one application, substantially the same gas turbine engine component, such as a turbine rotor with disks, blades and sideplates might be for use on gas turbine engines having a thrust rating at sea level take-off which is plus or minus 25%. Substantially the same also means for a turbine blade, for example, the part has the substantially the same weight and substantially the same outer dimensions such that the part, without further criteria, would be interchangeable in the engine assembly. Changes to the engine control for essentially the same engine can be utilized to achieve different thrust ratings across such a range.

In addition, the flight C in a relatively hot area may result in more challenges and stresses on aircraft engine components than would the flight A or B in relatively cooler areas.

As an example, temperatures within the gas turbine engine vary by multiples of degrees for each increased degree in ambient temperature.

In the prior art, since all gas turbine engine components are grouped together and shipped to an operator, a component which is closer to a known (or desirable) specification is as likely to be shipped with an engine to be utilized on an aircraft having more challenging conditions as to an aircraft having less challenging conditions. Similarly, a component spaced further from specification would also be as likely to be placed on an aircraft in a more challenging use as it would be to be utilized in a less challenging use.

The teachings of this disclosure groups those gas turbine engine components closer to specification for use on more challenging applications, and such that the entire engine is provided with such components. The components which are spaced further from specification would be utilized in less challenging aircraft uses.

Thus, a gas turbine engine utilized on a more challenging aircraft use would be operational for a longer period of time than an engine with "striped" rotor airfoil components, due to the more common components which are closer to the optimal specification of its components.

On the other hand, an aircraft having less challenging uses would not be harmed as the components would likely be more than capable of handling the less challenging operation.

Since useful life is often determined by the performance of the lowest capability part in the more challenging use case, the less challenging use cases will also benefit as their utilization will not be penalized by the challenging operators "extreme use." Said another way, the operators with less challenging use applications will receive components that are well suited for those applications, and are fully suited for the quality required of the less challenging application.

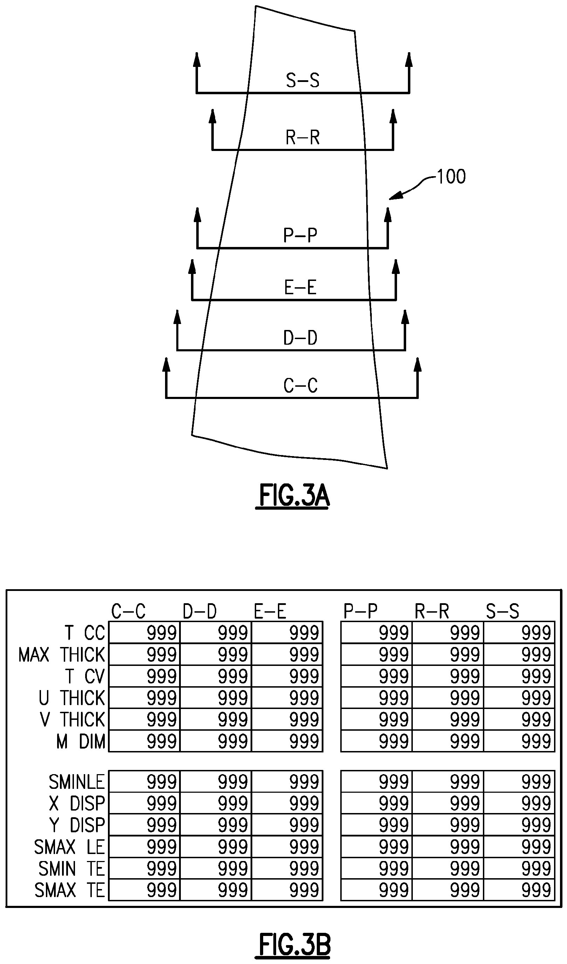

Figure 3A shows a component 100, which is a gas turbine engine turbine blade air foil. However, the teaching of this disclosure extends to many other components. It is known to gather a number of numeric details with regard to each formed component, as shown in Figure 3B. Figure 3B shows all of the measured geometric features as the same number "999." Of course, in practice, these numbers would all vary for different engine aircraft applications.

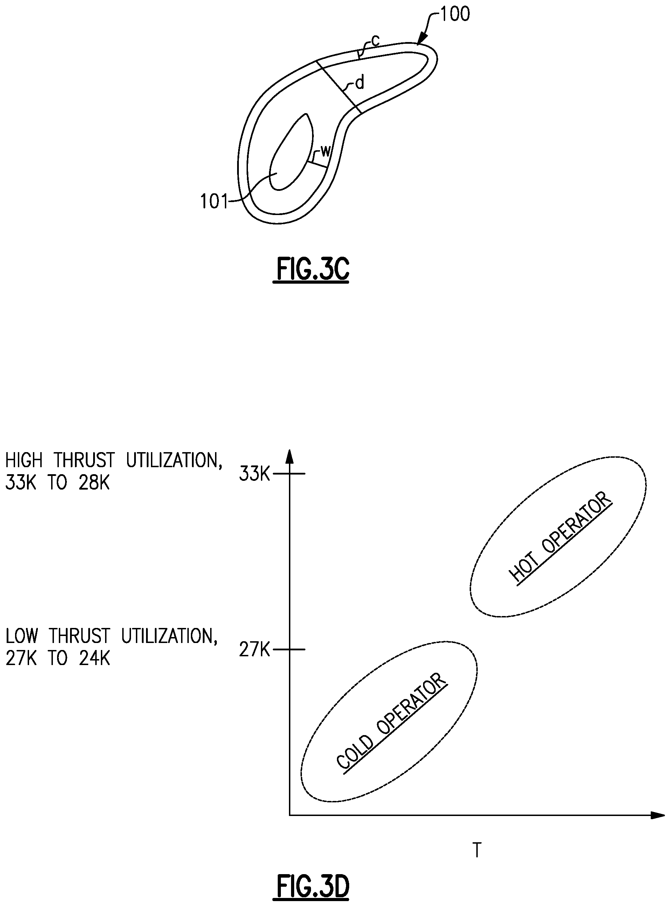

Figure 3C shows a cross-section through the airfoil 100. Three distinct characteristics are shown. First, a central cavity 101 is spaced from an outer wall of the airfoil by a wall thickness W. Although a wall thickness W is mentioned, other aspects that would provide an indication of the shape of a cooling cavity can be utilized. Stated another way, the component may have inner cooling cavity geometric features which can be measured and the classification done, at least in part, based upon the inner geometric features. A coating has a coating thickness C. The airfoil 100 itself has a number of geometric characteristics shown, as one example d.

Among the details gathered in the table of Figure 3B are each of the W, C and d.

By measuring and evaluating these characteristics, and other characteristics, each formed gas turbine engine component can be classified into a number of categories. The categories could be defined as close to specification, or spaced further from specification. Further, these differences could be quantified into a percentile ranking with gradients across the range.

This disclosure thus classifies components on several characteristics that were never considered by the prior art. However, it then uses the classifications in a unique, and powerful way.

Now, once the component has been classified into a particular category, a recommended use for the component can be identified. As an example, as shown in Figure 3D, the temperature range for a gas turbine engine operating in a particular aircraft use is plotted against the thrust for a particular aircraft. So called "cold operator" engines might be assigned components which are further from specification whereas "hot operator" engines might receive components which are closer to specification.

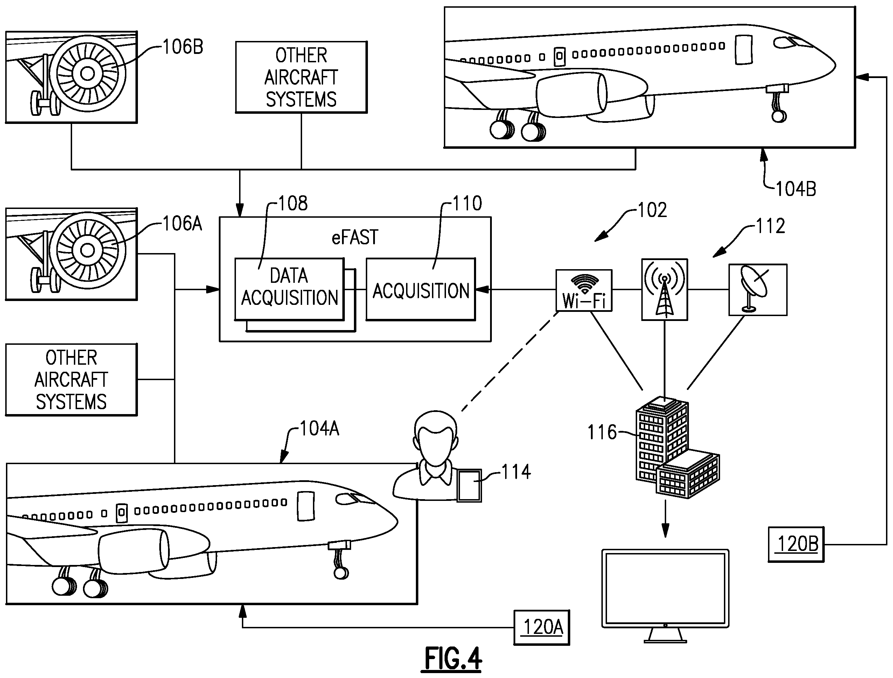

Figure 4 shows a system 102 for utilizing this method. An aircraft 104 communicates with its engines 106, and data is sent to a data acquisition unit 108, and to a communication system 110 which communicates in some manner 112 such as Wi-Fi, satellite, hardwire, or other communication systems to provide information to a maintenance operator 114, or to a ground system 116. Once a particular aircraft usage is known, the gas turbine engine component manufacturer can identify where the particular use is on a scale of challenging uses.

Again, those component which are likely to be capable of handling more challenging uses are assigned the components which are closer to specification, while the less challenging applications might receive components which are fully acceptable, and within tolerance range, but perhaps further from specification.

While three characteristics are illustrated in Figure 3C, it should be understood that the final classification into categories may occur through a combination of characteristics, or differing characteristics. The final classification algorithms can be developed over time.

In fact, in Figure 4, two aircraft 104A and 104B having engines 106A and 106B, respectively, are illustrated. Engine 104A operates in more challenging uses, and should use "hot operator" components, whereas engine 104B operates in a less challenging use, and can utilize "cold operator' components. As shown, "hot operator" component 120A are being shipped for use with aircraft 104A, while "cold operator" components 120B are being shipped for use with aircraft 104B. Of course, the same method can be used on original equipment for the aircraft, should their eventual uses be known beforehand.

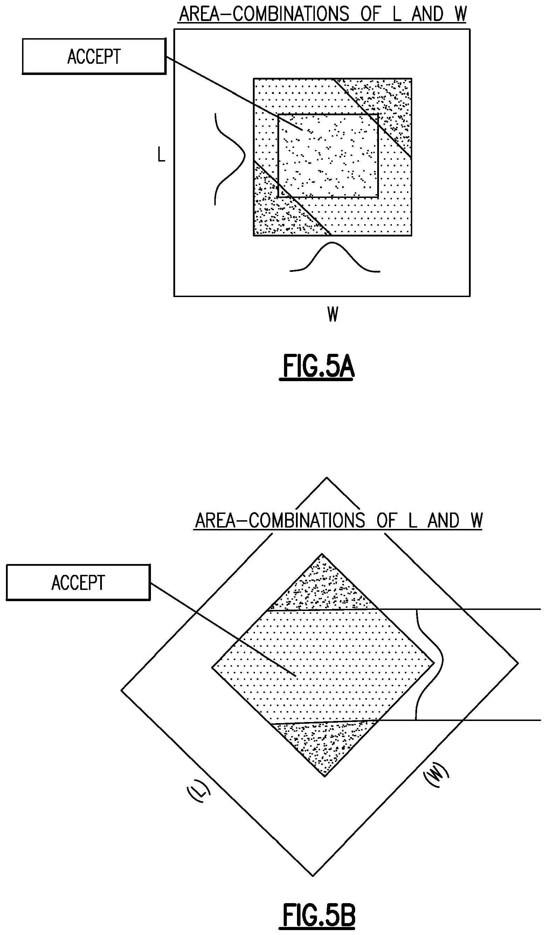

Figure 5A shows an area of acceptance which might exist in the prior art.

Figure 5B shows that with the disclosed method, the acceptance region can be greatly expanded as a tolerance range for a component that will necessarily be utilized on a less challenging application might be greater than for a component that might well be utilized on a very challenging application.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A method of determining a use for a plurality of gas turbine engine components (100; 120A, 120B) comprising the steps of:
measuring at least one property of said components (100; 120A, 120B);
comparing the at least one property of each component (100; 120A, 120B) to a known specification; and
classifying each component (100; 120A, 120B) into one of at least first and second categories, wherein the at least one property of components (120A) in the first category is closer to said known specification than the at least one property of components (120B) in the second category, and
recommending a suggested future use for the first category on a first aircraft (104A) expected to operate in more challenging flight conditions and for the second category on a second aircraft (104B) expected to operate in less challenging flight conditions, wherein the recommended future use includes a suggestion to utilize components (120A, 120B) of said first and second categories on particular type flights (A, B, C).

2. The method as set forth in claim 1, wherein the particular type flights (A, B, C) are on an engine (20; 106) having a particular thrust rating.

3. The method as set forth in claim 2, wherein said thrust ratings of all said engines (20; 106) at sea level take-off are plus or minus 25%.

4. The method as set forth in claim 1, 2 or 3, wherein the particular type flights (A, B, C) are for use on an aircraft (104) flying routes having distinctly different ambient temperature.

5. The method as set forth in any preceding claim, wherein said components (100) include an internal cooling cavity (101), and said at least one property comprises a shape of said internal cooling cavity (101), and/or a wall thickness (W) from said internal cooling cavity (101) to an outer wall.

6. The method as set forth in any preceding claim, wherein said components (100) have an outer coating, and said at least one property comprises a thickness (C) of said coating.

7. The method as set forth in any preceding claim, wherein said components (100) have outer geometric features (d), and said at least one property comprises said outer geometric features (d).

8. The method as set forth in any preceding claim, further comprising manufacturing said plurality of gas turbine engine components (100) to said known specification.

9. A data processing system (102) comprising means adapted to carry out the method of one of the preceeding claims.

## Patentansprüche

1. Verfahren zum Bestimmen einer Verwendung für eine Vielzahl von Gasturbinentriebwerkskomponenten (100; 120A, 120B), umfassend die folgenden Schritte:
Messen von mindestens einer Eigenschaft der Komponenten (100; 120A, 120B);
Vergleichen der mindestens einen Eigenschaft jeder Komponente (100; 120A, 120B) mit einer bekannten Spezifikation; und
Klassifizieren jeder Komponente (100; 120A, 120B) in eine von mindestens einer ersten und einer zweiten Kategorie, wobei die mindestens eine Eigenschaft der Komponenten (120A) in der erste Kategorie näher an der bekannten Spezifikation ist als die mindestens eine Eigenschaft der Komponenten (120B) in der zweiten Kategorie, und
Empfehlen einer vorgeschlagenen zukünftigen Verwendung für die erste Kategorie bei einem ersten Flugzeug (104A), von dem erwartet wird, dass es unter anspruchsvolleren Flugbedingungen betrieben wird und für die zweite Kategorie bei einem zweiten Flugzeug (104B), von dem erwartet wird, dass es unter weniger anspruchsvollen Flugbedingungen betrieben wird, wobei die empfohlene zukünftige Verwendung einen Vorschlag zur Verwendung der Komponenten (120A, 120B) der ersten und der zweiten Kategorie bei Flügen (A, B, C) eines bestimmten Typs beinhaltet.

2. Verfahren nach Anspruch 1, wobei die Flüge (A, B, C) eines bestimmten Typs bei einem Triebwerk (20; 106) stattfinden, das einen bestimmten Schubkraftwert aufweist.

3. Verfahren nach Anspruch 2, wobei die Schubkraftwerte aller Triebwerke (20; 106) bei Start auf Meereshöhe plus oder minus 25 % betragen.

4. Verfahren nach Anspruch 1, 2 oder 3, wobei die Flüge (A, B, C) eines bestimmten Typs zur Verwendung bei einem Flugzeug (104) sind, das Strecken fliegt, die eine deutlich unterschiedliche Umgebungstemperatur aufweisen.

5. Verfahren nach einem der vorhergehenden Ansprüche, wobei die Komponenten (100) einen internen Kühlhohlraum (101) beinhalten und die mindestens eine Eigenschaft eine Form des internen Kühlhohlraums (101) und/oder eine Wanddicke (W) von dem internen Kühlhohlraum (101) zu einer Außenwand umfasst.

6. Verfahren nach einem der vorhergehenden Ansprüche, wobei die Komponenten (100) eine äußere Beschichtung aufweisen und die mindestens eine Eigenschaft eine Dicke (C) der Beschichtung umfasst.

7. Verfahren nach einem der vorhergehenden Ansprüche, wobei die Komponenten (100) äußere geometrische Merkmale (d) aufweisen und die mindestens eine Eigenschaft die äußeren geometrischen Merkmale (d) umfasst.

8. Verfahren nach einem der vorhergehenden Ansprüche, ferner umfassend das Herstellen der Vielzahl von Gasturbinentriebwerkskomponenten (100) nach der bekannten Spezifikation.

9. Datenverarbeitungssystem (102), das Mittel umfasst, die zum Ausführen des Verfahrens nach einem der vorhergehenden Ansprüche ausgestaltet sind.

## Revendications

1. Procédé de détermination d'une utilisation pour une pluralité de composants de moteurs à turbine à gaz (100 ; 120A, 120B) comprenant les étapes de :
mesure d'au moins une propriété desdits composants (100 ; 120A, 120B) ;
comparaison de l'au moins une propriété de chaque composant (100 ; 120A, 120B) avec une spécification connue ; et
classification de chaque composant (100 ; 120A, 120B) dans l'une d'au moins une première et une seconde catégories, dans lequel l'au moins une propriété de composants (120A) dans la première catégorie est plus proche de ladite spécification connue que l'au moins une propriété de composants (120B) dans la seconde catégorie, et
recommandation d'une utilisation future suggérée pour la première catégorie sur un premier aéronef (104A) qui devrait fonctionner dans des conditions de vol plus difficiles et pour la seconde catégorie sur un second aéronef (104B) qui devrait fonctionner dans des conditions de vol moins difficiles, dans lequel l'utilisation future recommandée comporte une suggestion d'utiliser des composants (120A, 120B) desdites première et seconde catégories sur des vols de type particulier (A, B, C).

2. Procédé selon la revendication 1, dans lequel les vols de type particulier (A, B, C) sont sur un moteur (20 ; 106) ayant une poussée nominale particulière.

3. Procédé selon la revendication 2, dans lequel lesdites poussées nominales de tous lesdits moteurs (20 ; 106) au décollage au niveau de la mer sont de plus ou moins 25 %.

4. Procédé selon la revendication 1, 2 ou 3, dans lequel les vols de type particulier (A, B, C) sont destinés à être utilisés sur des routes aériennes d'aéronef (104) ayant une température ambiante nettement différente.

5. Procédé selon une quelconque revendication précédente, dans lequel lesdits composants (100) comportent une cavité de refroidissement interne (101), et ladite au moins une propriété comprend une forme de ladite cavité de refroidissement interne (101) et/ou une épaisseur de paroi (W) de ladite cavité de refroidissement interne (101) à une paroi externe.

6. Procédé selon une quelconque revendication précédente, dans lequel lesdits composants (100) ont un revêtement extérieur, et ladite au moins une propriété comprend une épaisseur (C) dudit revêtement.

7. Procédé selon une quelconque revendication précédente, dans lequel lesdits composants (100) ont des caractéristiques géométriques externes (d), et ladite au moins une propriété comprend lesdites caractéristiques géométriques externes (d).

8. Procédé selon une quelconque revendication précédente, comprenant en outre la fabrication de ladite pluralité de composants de moteurs de turbine à gaz (100) selon ladite spécification connue.

9. Système de traitement de données (102) comprenant des moyens conçus pour mettre en œuvre le procédé selon l'une des revendications précédentes.
